# EUROPEAN PATENT APPLICATION

(11) **EP 3 159 683 A1**
(43) Date of publication of application: **26.04.2017**
(21) Application number: 16382477.4
(22) Date of filing: 20.10.2016
(51) Int. Cl.: G01N 27/07

(54) **CONDUCTIVITY PROBE**

(30) Priority: 21.10.2015 ES 201531141 U
(71) Applicant: Dinfer Electronica, S.L., 41500 Alcala de Guadaira-Sevilla (ES)
(72) Inventor: RODRÍGUEZ LÓPEZ, Juan Luís, 41500 Sevilla (ES)
(74) Representative: Pons Ariño, Angel

(57) **Abstract**

A manipulation-proof conductivity sensor composed of a main body (1), having electrical connections and contact poles (2), wherein the main body (1) additionally comprises an anchorage piece (3) and a locking piece (4) that interlock with each other and with the main body (1), and an opening (5) having an electrical body (6) between two ends of the opening (5). The anchorage piece (3) comprises a first projection (7) having a first groove (8) to receive the electrical conductor (6) and first extensions (11) parallel to the first projection (7) with a first serrated side (12), and the locking piece (4) comprises two second projections (9) wherebetween there is a second groove (10) to receive the electrical conductor (6) and part of the first projection (7), having second serrated sides (13) to be anchored to the first serrated sides (12).

## Description

### OBJECT OF THE INVENTION

The present invention falls within the field of the art of conductivity sensors. More specifically, a conductivity sensor is proposed configured such that, once formed, it cannot be manipulated without breaking.

### BACKGROUND OF THE INVENTION

Conductivity is defined as the capacity of a substance to conduct electricity. Conductivity sensors are devices that make it possible to determine said conductivity.

Currently, conductivity sensors prepared to measure the conductivity of the matter between two stainless steel pins are known. In order to make it waterproof, which is an essential characteristic for a sensor that will be immersed in a liquid, the entire electrical assembly of its interior is covered by a plastic injection process. This process consists of injecting two different bodies, that of the sensor strictly speaking and that of the different anchorage pieces of the sensor, to the tube or flat structures where they are finally fixed.

This separate injection process requires gluing both pieces with an adhesive which, on dissolving the superficial layer of the plastic, joins them firmly. This represents a significant technical problem, since the sensor does not fulfil environmental criteria. Additionally, current sensors use a large amount of plastic in their manufacture.

### DESCRIPTION OF THE INVENTION

The present invention proposes a conductivity sensor having the major advantage that it cannot be manipulated. In the event that an unauthorised person wishes to modify the sensor, he or she would have to break it and the installation managers would quickly detect it.

The key to achieving a manipulation-proof sensor is that it comprises an anchorage piece and a locking piece having a certain configuration to interlock with each other and with the main body of the sensor. Said anchorage and locking pieces act as clips that, once interlocked, cannot be separated without breaking them.

Another advantage associated to the type of configuration proposed and that the present invention offers is that it eliminates the need to use adhesive to join different parts of the sensor. As described previously, the adhesives used in these unions in the state of the art are highly polluting. Therefore, the present invention contributes to environmental protection in this regard.

Another very significant advantage of the present invention is that the proposed sensor has a much narrower configuration than the sensors of the state of the art, which helps to reduce the amount of plastic used to manufacture it. This advantage also results in enhanced environmental protection.

### DESCRIPTION OF THE DRAWINGS

In order to complement the description being made and with the object of helping to better understand the characteristics of the invention, in accordance with a preferred embodiment thereof, said description is accompanied, as an integral part thereof, by a set of drawings where, in an illustrative and non-limiting manner, the following has been represented:
Figure 1 shows a view of the main body of the conductivity sensor.
Figure 2a shows a view of the anchorage piece in a first example of embodiment.
Figure 2b shows a view of the anchorage piece in a second example of embodiment.
Figure 3 shows a view of the locking piece.
Figure 4 shows a perspective view of the conductivity sensor mounted in the first example of embodiment.
Figure 5 shows a perspective view of the conductivity sensor mounted in the second example of embodiment.

### PREFERRED EMBODIMENT OF THE INVENTION

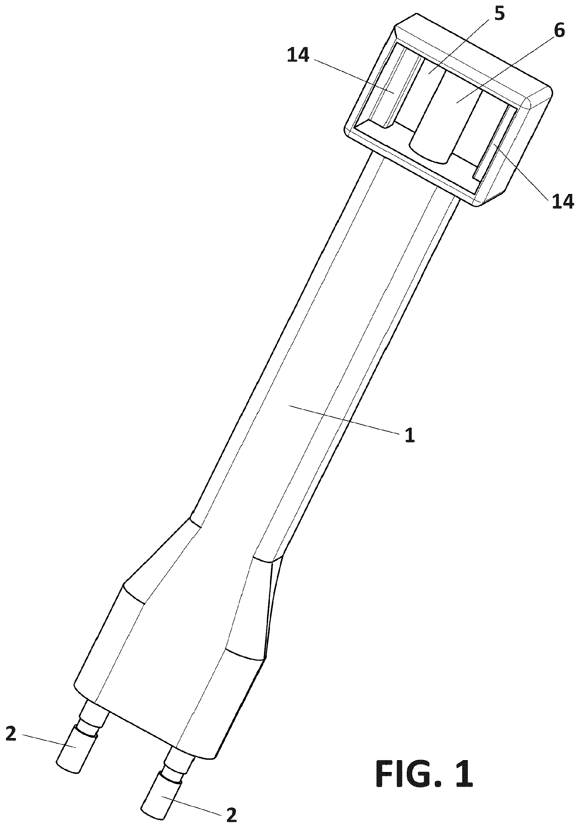

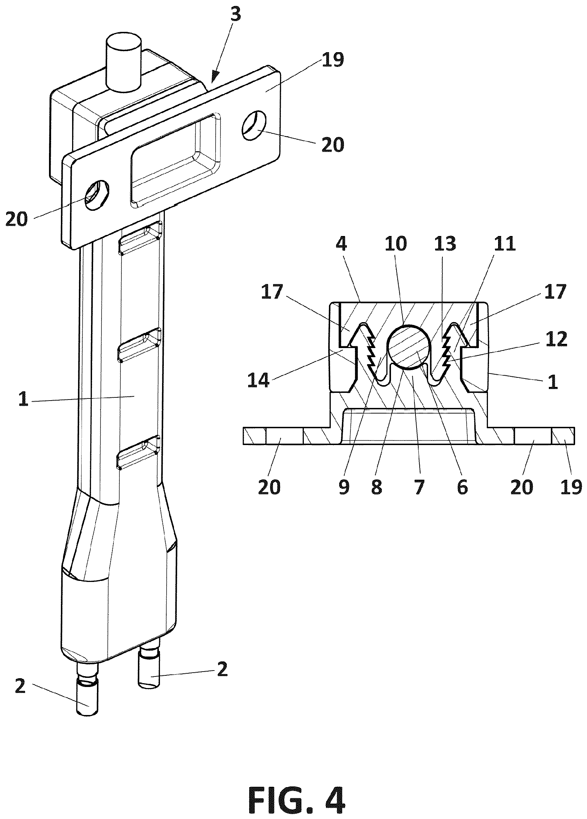

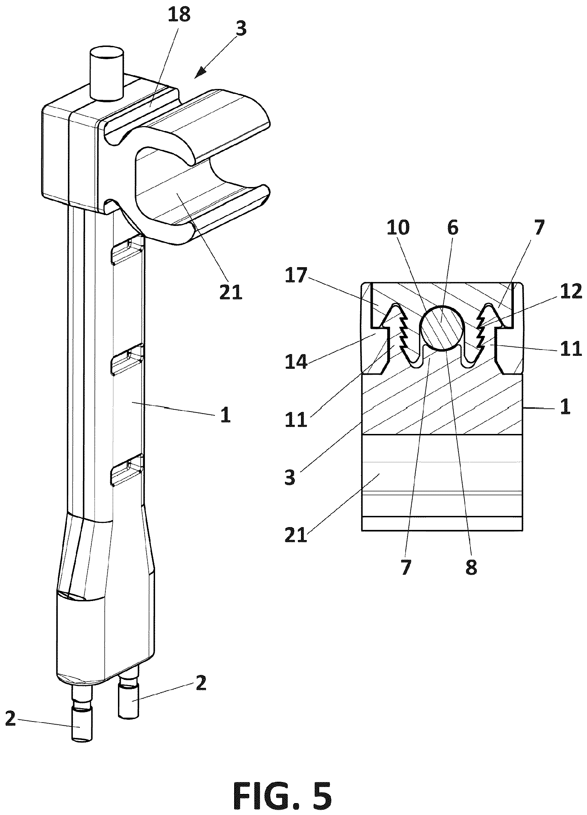

Following is a description, with the help of figures 1 to 5, of two examples of embodiment of the present invention.

A conductivity sensor is proposed that comprises a main body (1), such as that shown in Figure 1, which in turn comprises contact poles (2) on one of its ends and a plurality of electrical connections in its interior. The contact poles (2) are stainless steel pins. The sensor is destined for joining to a tube or to a flat surface.

The sensor comprises an anchorage piece (3) and a locking piece (4) configured to join to each other and to the main body (1). The anchorage piece (3) is the piece that makes it possible to join with the aforementioned tube or flat surface. The dimensions of the anchorage part (3) will depend on the dimensions of the tube or on whether there are restrictions on the size of the flat surface to which they will be joined.

The main body (1) comprises at least one opening (5) wherethrough an electrical conductor (6) passes that extends from the contact poles (2), crossing the entire main body (1), passes through the opening (5) and protrudes. The control signals captured by the contact poles (2) (stainless steel pins) pass through the electrical conductor (6). Data collection is performed by connecting an electronic control device to the sensor, which receives the information taken by the contact poles (2) and is transmitted through the electrical conductor (6).

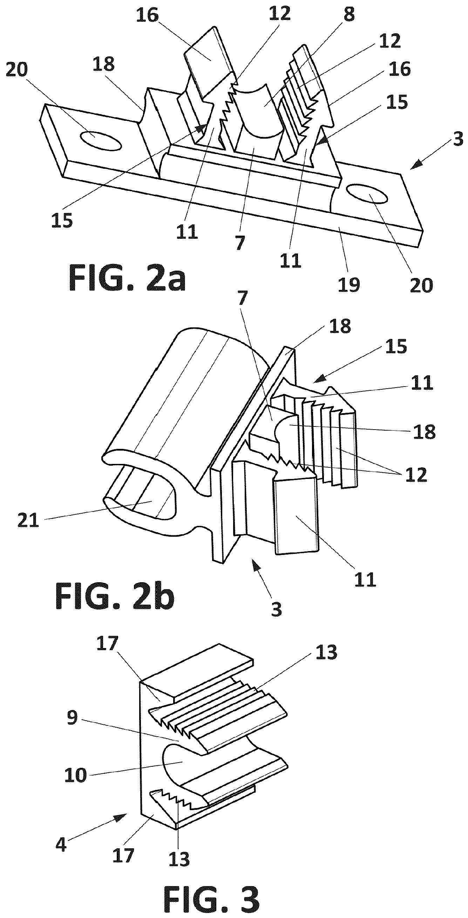

The anchorage piece (3) has been represented in figures 2a and 2b. Each shows a different example of embodiment. The essential parts of the anchorage piece (3) are a first projection (7) having a first groove (8) destined for receiving the electrical conductor (6) and first extensions (11) that extend in a parallel direction to the first projection (7) and which have a first serrated side (12) oriented toward the first projection (7). The function of the first groove (8) is to hold the electrical conductor (6).

Figure 3 represents the locking piece (4). Said piece is destined for fitting around the electrical conduct (6) of the sensor together with the anchorage piece.

The locking piece (4) comprises second projections (9) among which a second groove (10) is disposed destined to receive the electrical conductor (6) and part of the first projection (7) and having second serrated sides (13) destined for anchoring to the first serrated sides (12) of the first extensions (11).

The main body (1) additionally comprises two projections (14) in the opening (5) which are two stainless steel pins. The first extensions (11) of the first anchorage parts (3) comprise, on the side opposite the first serrated side (12), recesses (15) having a complementary configuration to that of the projections (14). Said recesses (15) are destined for remaining in contact with the projections (14).

Preferably, the first extensions (11) comprise, on the side opposite the first serrated side (11), a first inclined portion (16). In this embodiment, the locking piece (4) comprises second extensions (17) having an inclined side with the same degree of inclination as the first inclined portion (16) and is destined for remaining in contact therewith.

The anchorage piece (3) comprises a support base (18) wherefrom the first projection (7) and the first extensions (11) emerge.

In a first example of embodiment, shown in Figure 2a, the anchorage piece (3) additionally comprises a flat portion (19) that extends from the support base (18) in a perpendicular direction to the first projection (7) and the first extensions (11), and which comprises holes (20).

In a second example of embodiment shown in Figure 2b, the anchorage piece (3) additionally comprises a bracket groove (21) that extends from the support base (18) in a direction opposite the first projection (7) and the first extensions (11). The bracket groove (21) may have different dimensions to adapt to different sizes of the tube around which it will be disposed.

## Claims

1. A conductivity sensor comprising a main body (1) which, in turn, comprises contact poles (2) on one of its ends and a plurality of electrical connections in its interior,
and is **characterised in that** it comprises:
- an anchorage piece (3) and a locking piece (4) configured to join to each other and to the main body (2); and:
- the main body (1) comprises at least one opening (5) having at least one electrical body (6) that extends between two of the ends of the opening (5),
- the anchorage piece (3) comprises:
- a first projection (7) having a first groove (8) destined for receiving the electrical conductor (6),
- first extensions (11) that extend in a direction parallel to the first projection (7) and having a first serrated side (12) oriented toward the first projection (7),
- the locking piece (4) comprises:
- two second projections (9) wherebetween a second groove (10) is disposed destined to receive the electrical conductor (6) and part of the first projection (7) and having second serrated sides (13) destined for anchoring to the first serrated sides (12) of the first extensions (11).

2. The conductivity sensor, according to claim 1, **characterised in that**:
- the main body (1) comprises two projections (14) in the opening (5),
- the first projections (11) comprise, on the side opposite the first serrated side (12), recesses (15) having a complementary configuration to that of the projections (14) and which are destined for remaining in contact therewith.

3. The conductivity sensor, according to claim 1, **characterised in that**:
- the first extensions (11) comprise, on the side opposite the first serrated side (11), a first inclined portion (16),
- the locking piece (4) comprises second extensions (17) having an inclined side with the same inclination as the first inclined portion (16) and which is destined for remaining in contact therewith.

4. The conductivity sensor, according to claim 1, **characterised in that** the anchorage piece (3) comprises a support base (18) wherefrom the first projection (7) and the first extensions (11) extend.

5. The conductivity sensor, according to claim 4, **characterised in that** the anchorage piece (3) additionally comprises a flat portion (19) that extends from the support base (18) in a direction perpendicular to the first projection (7) and the first extensions (11), and which comprises holes (20).

6. The conductivity sensor, according to claim 4, **characterised in that** the anchorage piece (3) additionally comprises a bracket groove (21) that extends from the support base (18) in a direction opposite the first projection (7) and the first extensions (11).
